# EUROPEAN PATENT APPLICATION

(11) **EP 1 970 284 A1**
(43) Date of publication of application: **17.09.2008**
(21) Application number: 07104255.0
(22) Date of filing: 15.03.2007
(51) Int. Cl.: B62B 7/14, B62B 9/12

(54) **Bracket for supporting a child seat on an undercarriage**

(71) Applicant: Team-Tex, 38230 Charvieu (FR)
(72) Inventor: Van der Vegt, Herman, 3512 LL, Utrecht (NL)
(74) Representative: Uittenbogaart, Gustaaf Adolf

(57) **Abstract**

The invention concerns a bracket (4) for supporting a child seat (2) on an undercarriage (8) whereby the child seat (2) is at each side connected to a bracket (4) and the bracket (4) is connected to the undercarriage (8) by at least one support bar (6) and can rotate around a rotation axis. According to the invention the bracket (4) comprises an arcuate rail (30) perpendicular to the rotation axis and a slide (27) for moving along the arcuate rail (30) whereby the rail (30) is connected to the child seat (2) and the slide (27) is connected to the support bar (6).

## Description

The invention concerns a bracket according to the preamble of claim 1. Such brackets are known whereby for rotating the child seat the bracket includes a pivot. The disadvantage of the known bracket is that for making rotation possible the pivot must have some play and this play in the pivot leads to undesirable free movements of the child seat.

In order to overcome this disadvantage the bracket is according to claim 1. In this way the play needed for making the rotation possible leads to negligible free movements of the child seat relative to the undercarriage and also the forces for supporting the slide on the rail are lower and so resulting deformations are negligible.

In accordance with an embodiment the bracket is according to claim 2. In this way the rail and slide form a stable connection for rotating the child seat.

In accordance with an embodiment the bracket is according to claim 3. In this way the arcuate rail and slide are protected against contamination.

In accordance with an embodiment the bracket is according to claim 4. In this way it is easy to move the arcuate slide along the rail.

In accordance with an embodiment the bracket is according to claim 5. In this way free movement of the slide along the rail is prevented so ensuring that the child seat does not rotate inadvertently.

In accordance with an embodiment the bracket is according to claim 6. In this way the connection of the child seat to the undercarriage is more stable.

In accordance with an embodiment the bracket is according to claim 7. In this way the support bars can be connected to parts of the undercarriage that can move relative to one another, for instance during folding of the undercarriage.

In accordance with an embodiment the bracket is according to claim 8. The coupling of the child seat to the bracket is more stable this way.

In accordance with an embodiment the bracket is according to claim 9. This makes it possible to grip the child seat between the contact areas so that placing it on the bracket is easier.

In accordance with an embodiment the bracket is according to claim 10. This makes placing the child seat on the bracket easier.

In accordance with an embodiment the bracket is according to claim 11. This makes a strong coupling between the child seat and the bracket possible.

In accordance with an embodiment the bracket is according to claim 12. This makes coupling or uncoupling of the child seat and the bracket easier.

In accordance with an embodiment the bracket is according to claim 13. This makes it possible that swivelling the child seat is limited if too large a swivel angle is undesirable as is the case when the child seat is for instance a carry cot.

The invention is hereafter explained with reference to one or more exemplary embodiments with the aid of a drawing. In the drawing
Figure 1 shows a perspective view of a stroller comprising an undercarriage on which a child seat is mounted,
Figure 2 shows a schematic section of a first embodiment of a bracket connecting the undercarriage and the child seat,
Figure 3 shows a top view of the bracket of figure 2,
Figure 4 shows a bottom view of the child seat at the location where the bracket of figure 2 is attached,
Figure 5 shows a detail of figure 2,
Figure 6 shows a section of the bracket of figure 2,
Figure 7 shows a schematic view of the bracket of figure 2 in two positions of the child seat,
Figure 8 shows a schematic view of a second embodiment of a bracket in two positions of the child seat,
Figure 9 shows a schematic view of a third embodiment of a bracket in two positions of the child seat, and
Figure 10 shows a side view of a fourth embodiment of a bracket with a mechanism for limiting the tilting of the bracket in dependence of the properties of the child seat.

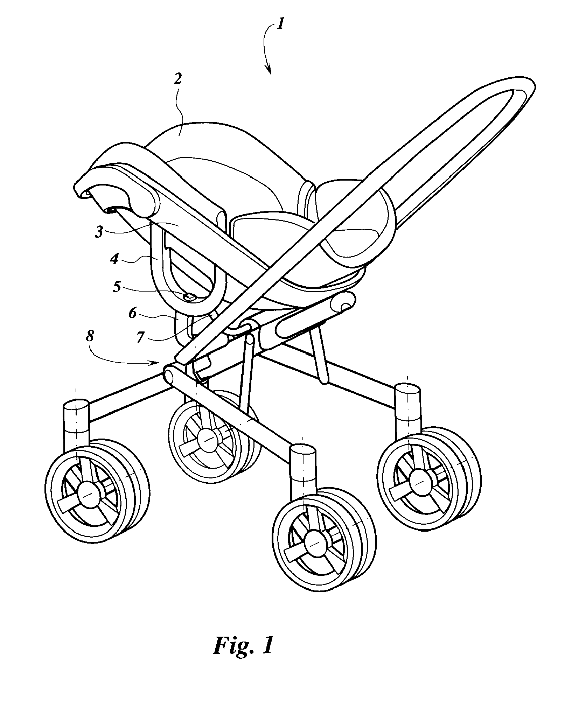

Figure 1 shows a stroller 1 with an undercarriage 8 and a child seat 2 connected thereto. For coupling the child seat 2 has a support 3 that is coupled to the undercarriage 8 by a coupling bracket 4. In this embodiment the coupling bracket 4 is coupled by a first support bar 6 and a second support bar 7 to the undercarriage 8. For enabling tilting the child seat 2 the coupling bracket 4 has a release button 5 which is described more extensively later.

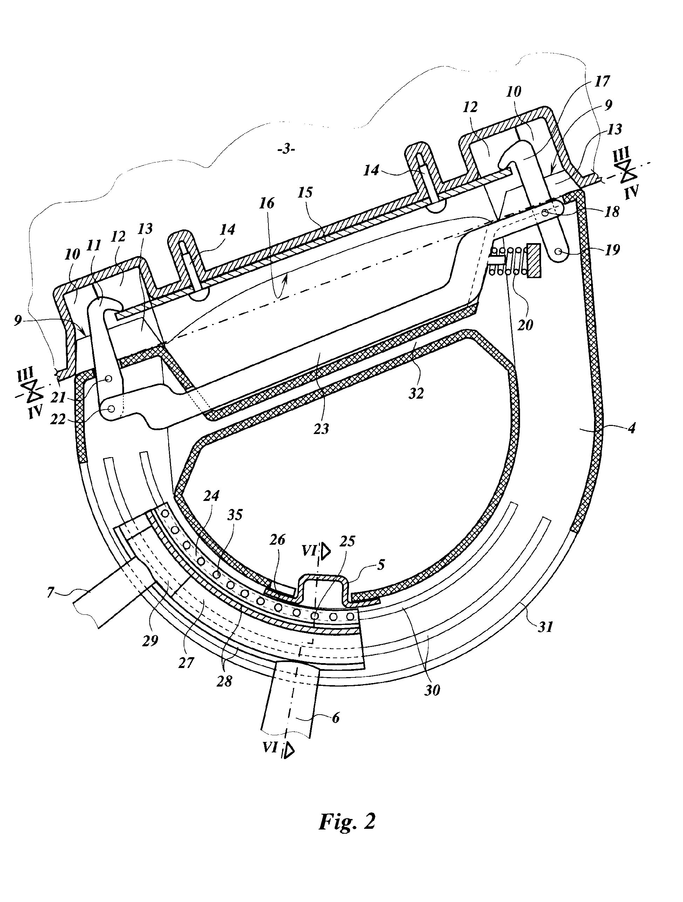

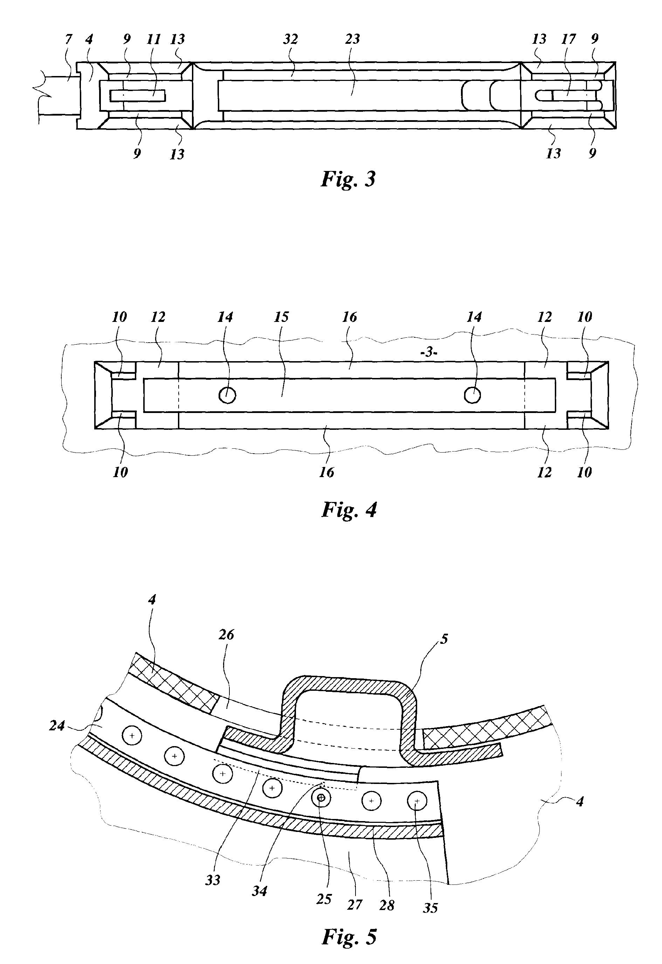

Figures 2, 4, 5 and 6 show the coupling bracket 4 and its connection to the support 3 of the child seat 2. The coupling bracket 4 is U - shaped and the ends of the legs of the U rest against the support 3. The distance between the legs where they are connected to the support 3 is at least 80 mm. For positioning the coupling bracket 4 relative to the support 3 the support 3 has two cavities 12 on each side of the child seat 2, which cavities 12 are shaped such that they narrow enclose cams 13 which are on the ends of the legs of the coupling brackets 4. The cams 13, which have tapered sides to ease the positioning of the support 3 on the coupling bracket 4, have a crest 9 against which a brace 10 of the cavity 12 rests when the support 3 is coupled to the coupling bracket 4. Between the cavities 12 the underside of the support 3 forms a grip 16. In a groove of the grip 16 a metal plate 15 is fastened with screws 14 to the underside of the support 3. The ends of the metal plate 15 extend in the cavities 12. At the end of a leg of the coupling bracket 4 a first hook 11 extends upwards between the two cams 13 and can hook around the first end of the metal plate 15 and at the end of the other leg of the coupling bracket 4 a second hook 17 extends upwards between the two cams 13 and can hook around the other end of the metal plate 15.

For maintaining an accurate position of the legs of the coupling bracket 4 they are connected by a connecting bar 32. There is a considerable distance between these legs so that there also is a considerable distance between the positions where the support 3 is connected to the coupling bracket 4 so that after coupling the hooks 11 and 17 around the metal plate 15 possible play between the support 3 and the coupling bracket 4 or the hooks 11 and 17 and the metal plate 15 does not lead to undesired movements of the child seat 2.

The first hook 11 can rotate around a swivel pin 21 and is activated by a activating bar 23 which connects to the first hook 11 with a coupling pin 22. The second hook 17 can rotate around a swivel pin 19 and is coupled to the activating bar 23 with a coupling pin 18. The coupling pins 18 and 22 and the swivel pins 19 and 21 are located such that with movement of the activating bar 23 the first hook 11 and the second hook 17 counter rotate. The activating bar 23 is pushed by a spring 20 in a direction so that the activating bar 23 pushes the upper ends of the first hook 11 and the second hook 17 towards the metal plate 15.

For mounting the child seat 2 on the coupling bracket 4 the support 3 is positioned with its cavities 12 above the cams 13 and moved towards the coupling bracket 4. The cams 13 position the support 3 accurately relative to the coupling bracket 4. The metal plate 15 touches the top of the first hook 11 and the top of the second hook 17 and due to the shapes of the hooks 11 and 17 pushes the hooks outwards against the force of the spring 20 until they snap around the metal plate 15 and hold the brace 10 of the support 3 against the crest 9 of the coupling bracket 4. For dismounting the child seat 2 from the coupling bracket 4 a hand is placed around each grip 16 and the activating bar 23 is pushed against the force of the spring 20 and the first hook 11 and the second hook 17 move outwards and the child seat 2 can be lifted off.

For swivelling the child seat 2 around a horizontal axis relative to the undercarriage 8 (see figure 1) the coupling bracket 4 is provided with a first rail 30 along which a first arcuate slide 27 can move along an arcuate path. The radius of this arcuate path is at least half the distance between the cavities 12 and preferably more than 50 mm so that when swivelling the arcuate slide 27 has to travel a considerable distance and play between the arcuate slide 27 and the rail 30 does not lead to undesired movement of the child seat 2. The first support bar 6 is connected to the first arcuate slide 27 and can rotate relative the coupling bracket 4 around the center of the arcuate path and thereby moves in an opening 31 of the outer circumference 4 of the coupling bracket 4.

For maintaining the child seat 2 in a desired swivel angle the first arcuate slide 27 has a plate 24 with holes 35 in which a catch 25 can be pushed so that the position of the first arcuate slide 27 is locked. The catch 25 has a pointed end that is pushed by a spring 37 in one of the holes 35 of the plate 24. For retracting the catch 25 out of the hole 35 the catch 25 has a retraction pin 34 which slides along a sloped surface 33 of the release button 5. By moving the release button 5 sideways in an opening 26 against a spring (not shown) the sloped surface 33 moves along the retraction pin 34 and pushes the catch 25 against the force of the spring 37 out of the hole 35 so that the first arcuate slide 27 can be moved along the rail 30 and the child seat 2 can be swivelled around a rotation axis formed by the centers of the arcuate paths of both coupling brackets 4.

A second arcuate slide 29 is in the first arcuate slide 27 and can move along a second rail 28. The second support bar 7 is connected to the second arcuate slide 29 and extends through an opening in the first arcuate slide 27 and the opening 31 in the coupling bracket 4. This makes a relative movement of the first support bar 6 and the second support bar 7 possible, which is for instance necessary when folding the undercarriage 8.

In the shown embodiment the first hook 11 and the second hook 17 couple to the metal plate 15 which is part of the support 3. In another embodiment the metal plate 15 is replaced by pins around which the hooks 11 and 17 can couple in a similar way. Also the embodiment shows an arcuate slide 27 moving inside a C - shaped housing with inside the housing rail 30. It is clear that other rail/slide constructions are possible, for instance whereby the arcuate slide surrounds a tube bent in a radius.

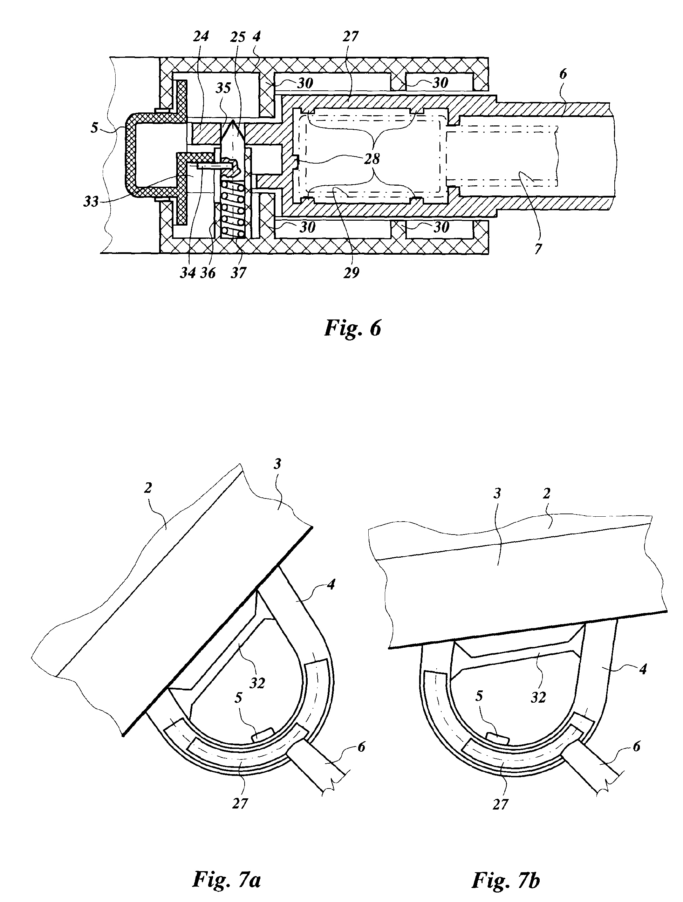

Figure 7a shows an embodiment of the coupling bracket 4 whereby the coupling bracket 4 is connected with only the first support bar 6 to the undercarriage. In the shown embodiment the first support bar 6 is connected to the end of the first arcuate slide 27, in other embodiments it is possible that the first support bar 6 is connected to the middle of the first arcuate slide 27 or any other location of the slide 27. Figure 7a shows the situation whereby the support 3 with the child seat 2 is severely inclined, figure 7b shows the situation whereby the support 3 with the child seat 2 is more or less horizontal.

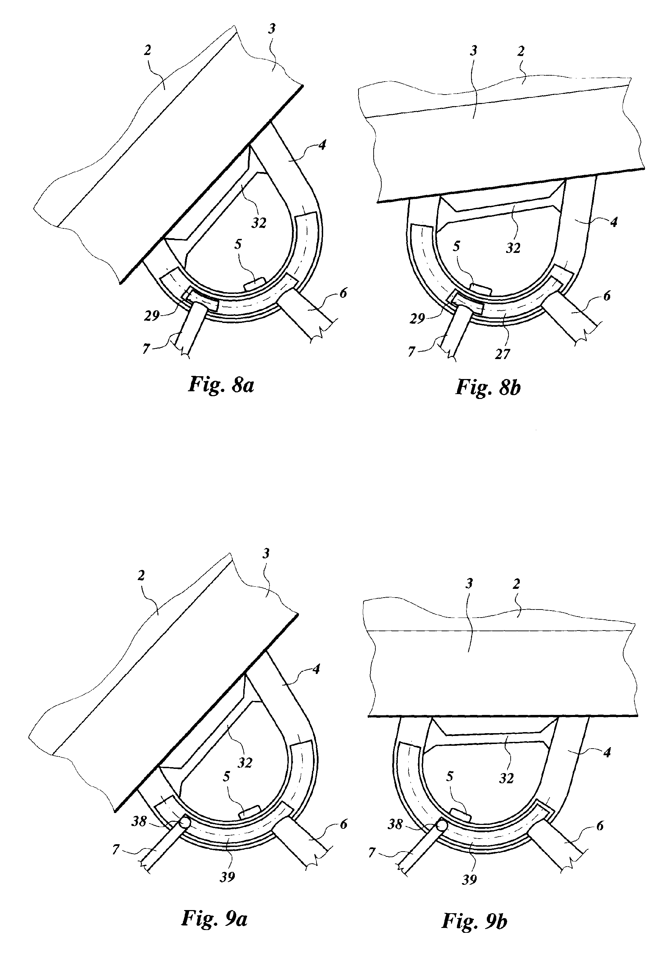

Figure 8a shows a further embodiment of the coupling bracket 4 which is similar to the coupling bracket 4 described in the figures 2 - 6, whereby the coupling bracket 4 is connected by the first support bar 6 and the second support bar 7 to the undercarriage 8. In figure 8a the support 3 and the child seat 2 are severely inclined, figure 8b shows the situation whereby the support 3 with the child seat is more or less horizontal.

Figure 9a shows a further embodiment of the coupling bracket 4 whereby the coupling bracket 4 is connected by the first support bar 6 and the second support bar 7 to the undercarriage 8. The first support bar 6 is fastened to one end of an arcuate slide 39 and the second support bar 7 is connected to a pivot 38 at the other end of the arcuate slide 39. In this way the arcuate slide 39 is firmly supported by the first support bar 6 and the second support bar 7 which can rotate relative one another in an easy way.

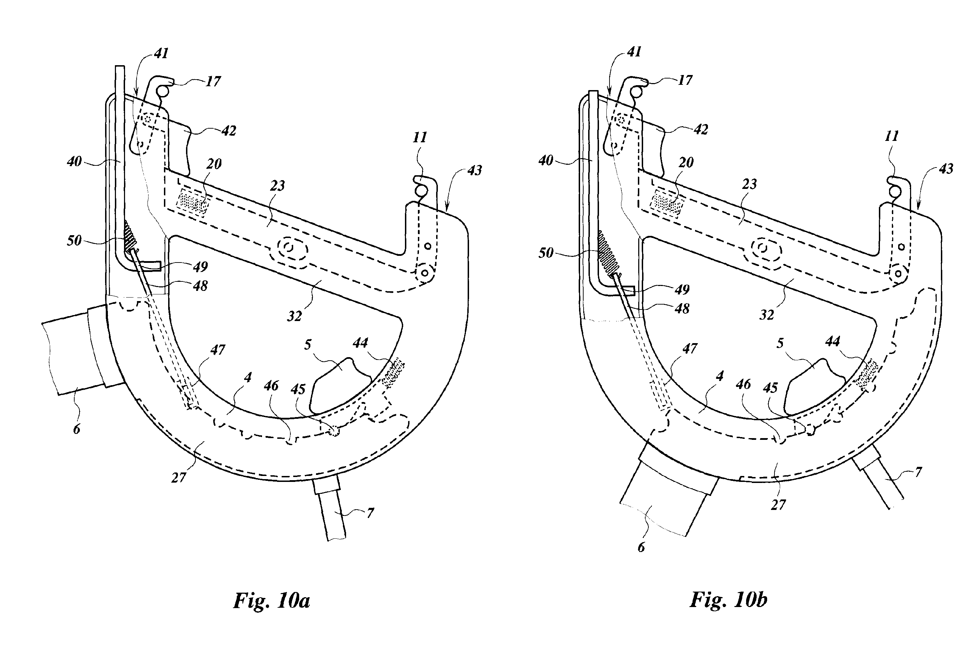

Figure 10a shows an embodiment of the bracket 4 whereby a child seat is supported by a first coupling surface 43 and a second coupling surface 41. The first coupling surface 43 and the second coupling surface 41 form a flat plane. The first hook 11 extends above the first coupling surface 41 and the second hook 17 extends above the first coupling surface 43. The movements of the first hook 11 and the second hook 17 are coupled by the connecting bar 23 which is moved by activating a button 42. The bracket 4 has a C-shaped body in which the first arcuate slide 27 can move as described earlier. In this embodiment the arcuate slide 27 is provided with notches 46 in which a pin 45 can be moved by a spring 44 so that the arcuate slide 27 is locked in a position. By moving the release button 5 the arcuate slide 27 can slide in the bracket 4.

The movement of the arcuate slide 27 can be blocked by a locking plate 48 as is shown in figure 10b. This locking plate 48 can slide in a guide slot 47 inside the bracket 4. The locking plate 48 has an opening through which a pin 40 extends so that the movement of the locking plate 48 and the pin 40 are coupled. The pin 40 extends above the second coupling surface 41 and can be pushed downwards against a force of a spring 50. This pushing downwards is desirable when the child seat 2 that is placed on the bracket 4 is for instance a carry cot and it is desirable to prevent tilting. The spring loaded metal pin 40 extends above the second coupling surface 41 and is pushed downwards by the carry cot. For other child seats 2 there might be no requirement for limiting the tilting of the child seat 2 and the pin 40 extends into an opening in the child seat 2 and is not pushed downwards. Figure 10a shows this situation and the movement of the arcuate slide 27 is not limited by the locking plate 48.

## Claims

1. Bracket for supporting a child seat (2) on an undercarriage (8) whereby the child seat is at each side connected to a bracket (4) and the bracket is connected to the undercarriage by at least one support bar (6) and can rotate around a rotation axis **characterized in that** the bracket (4) comprises an arcuate rail (30) perpendicular to the rotation axis and a slide (27) for moving along the arcuate rail whereby the rail is connected to the child seat (2) and the slide is connected to the support bar (6).

2. Bracket according to claim 1 whereby the arcuate rail (30) has a radius of at least 50mm.

3. Bracket according to claim 1 or 2 whereby the arcuate rail (30) comprises a profile with a C - shaped section that encloses the arcuate slide (27).

4. Bracket according to claim 1 or 2 whereby the arcuate rail comprises a tube or profile which is surrounded by the slide.

5. Bracket according to claim 1, 2, 3 or 4 whereby the bracket (4) comprises a spring (37) activated catch (25) for positioning the slide (27) on the rail (30).

6. Bracket in accordance with one of the previous claims whereby the arcuate slide (27) is coupled by a second support bar (7) to the undercarriage (8).

7. Bracket in accordance with claim 6 whereby the arcuate slide (27) has a pivot (38) for connecting to the second support bar (7).

8. Bracket in accordance with one of the previous claims whereby each bracket (4) has a contact area (13) for supporting the child seat (2) which contact area can support the child seat at least at two locations that are at a distances of more than 80 mm.

9. Bracket in accordance with claim 8 whereby the two locations form two separate contact areas with between them an opening for gripping the child seat (2).

10. Bracket in accordance with claim 8 or 9 whereby one or both contact areas are provided with notches (12,13) for positioning the child seat (2).

11. Bracket in accordance with one of the claims 8, 9 or 10 whereby each contact area (13) has a hook (11,17) for gripping the child seat (2).

12. Bracket in accordance with claim 11 whereby the bracket (4) has two hooks (11,17) which are coupled by a connecting bar (23) for simultaneous moving both hooks.

13. Bracket in accordance with one of the claims 8 - 12 whereby a contact area (41) has a sensor pin (40) for detecting properties of the child seat (2) whereby the sensor pin activates limiting means (48) for limiting the path of the arcuate slide (27.
